# EUROPEAN PATENT SPECIFICATION

(11) **EP 2 432 717 B1**
(45) Date of publication and mention of the grant of the patent: **04.12.2013**
(21) Application number: 09776420.3
(22) Date of filing: 06.03.2009
(51) Int. Cl.: B65G 57/00, B65G 61/00

(54) **A PALLETIZER AND A METHOD OF PALLETIZING ITEMS**
VORRICHTUNG UND VERFAHREN ZUR PALETTIERUNG VON ARTIKELN.
PALETTISEUR ET PROCEDE DE PALETTISATION D'ARTICLES

(43) Date of publication of application: 28.03.2012
(73) Proprietor: Optimove AS, 3412 Lierstranda (NO)
(72) Inventor: RUUD, Morten, 3530 Royse (NO)
(74) Representative: Popp, Eugen
(86) International application number: PCT/EP2009/001637
(87) International publication number: WO 2010/099809

(56) References cited:
- EP-A- 0 562 220
- DE-A1- 3 431 383
- US-A- 4 978 275
- US-A- 5 733 098
- US-A- 6 164 900

## Description

The present invention relates to a palletizer for the automatic loading or unloading of a pallet with a plurality of individual items and to a method of palletizing these items.

In a palletizer items are mechanically loaded onto a pallet for onward transportation. The load typically comprises a stack of several layers or tiers of items. In a conventional palletizer an infeed conveyor feeds these items to the palletizer where the items are grouped and orientated at a loading area to form a single layer of items in a desired pattern. Once the layer is formed, it is usually consolidated and then deposited onto a pallet which has previously been located on a work platform within the apparatus. This pallet is stacked with a predetermined number of these layers until a full pallet-load is obtained. The fully loaded pallet is then moved off the work platform and transported away from the apparatus by second conveyor.

It will be appreciated that one disadvantage of this type of palletizer is that either the pallet being loaded must be elevated to start off with and then lowered in increments as each layer or tier is loaded on it from the loading area or the layer or tier formed at the loading area must be raised to an appropriate level before it can be loaded above previously loaded layers on the pallet. Hence, operation of the infeed conveyor has to be interrupted while each layer is formed at the loading area and the actual loading of the pallet takes place.

In order to overcome this disadvantage, it has been proposed in other palletizers that a programmable robotic arm is used to take the items from the infeed conveyor and to load them individually onto a pallet. Using a programmable robotic arm in this way means that the loading operation is speeded up and operation of the infeed conveyor does not have to be interrupted while loading of the pallet takes place. However, apparatus of this type is only capable of loading items which comprise regularly shaped boxes that can be stacked readily. Also, problems can arise with the stack being loaded on the pallet if the arm does not place the items with complete accuracy. Small variations in the location of items from an ideal location can make the stack unstable and result in 'pallet overhang', where the stack on a pallet slips or tilts so that it overhangs the edges of the pallet. This is particularly prone to occur if a higher layer of items overhangs a lower layer.

In EP562220, the palletization of packs of sheets, books or the like is carried out through the conveyance of the packs, by means of a roller assembly formed by powered rollers, in a programmed way stopping certain rollers beneath those packs which are to be stopped in a programmed position and through the transfer and the putting down of the first row of packs on a palletization stand together with the picking up and the putting down of a separating sheet on every complete layer of packs formed on the palletization stand.

In US6164900, a programmable palletizer and method for forming at least one layer of packages on a pallet is disclosed, said palletizer comprising a rigid frame, an infeed conveyor positioned adjacent the frame for conveying successive packages into the palletizer, and a rollerbed assembly mounted on the frame and positioned juxtaposed the infeed conveyor for receiving successive packages from the infeed conveyor. The rollerbed assembly is formed on a single horizontal plane and is movable between an advanced position and a retracted position. The palletizer further includes a fixed back stop positioned adjacent the rollerbed assembly and rigidly connected to the frame for preventing the packages conveyed onto the rollerbed assembly from moving beyond a predetermined position thereon. A sweeper is arranged adjacent the rollerbed assembly and the fixed back stop for positioning the package in a predetermined position on the rollerbed assembly by rotating, displacing and squaring the package thereon.

The object of the present invention is to provide a palletizer which overcomes or substantially mitigates the latter problem and in some embodiments of the present invention to provide a palletizer that can handle items of various shapes and sizes other than boxes, for example tinned goods and the like.

It is also an object of the present invention to provide a method of palletizing items which also overcomes or substantially mitigates the aforementioned problem.

Palletizers are usually used for loading pallets with items. However, some palletizer are capable of being operated 'in reverse' to unload loaded pallets. The palletizer which is the subject of the present application is such a palletizer and therefore in the following description and in the claims wording relating to operation of the machine to load a pallet should be understood to include operation in reverse whereby a pallet can be unloaded.

According to a first aspect of the present invention there is provided a palletizer for loading a pallet with a plurality of items comprising
a work area in which the pallet is located during loading;
an infeed conveyor operable to convey the items to be palletized to a location within the work area;
a loading means having a gripper operable to pick up the items from the infeed conveyor and load them in a predetermined configuration on the pallet located in the work area;
a programmable control means operable to control operation of the loading means and the infeed conveyor;
characterised in that
a compactor is located in the work area and is operable by the control means to compact each layer of a stack of items as it is built up on the pallet by the loading means.

Preferably, the compactor comprises a frame mounted on an elevator such that it can be located around each layer of a stack of items, the frame comprising movable pusher bars operable to compact said layer after it has been built up.

Preferably also, the frame is rectangular and four movable pusher bars are mounted on it that are independently moveable inwardly of the frame.

Preferably also, the movable pusher bars operate to compact each intermediate layer of the stack of items as the layer immediately above it is being built up.

Preferably also, the movable pusher bars of the compactor are used to detect the size of the pallet located in the work area prior to loading. Advantageously, information concerning the size of the pallet is transmitted to the control means which then controls operation of the loading means whereby items are loaded on the pallet in a predetermined configuration appropriate for the pallet size detected.

Preferably also, the gripper comprises a pair of parallel clamping plates which form jaws in which an item or a plurality of items are gripped during loading.

Compaction of each layer of the stack immediately it has been loaded is a significant advantage as it reduces the risk of the stack becoming unstable. It also means that a gripper can be used which by virtue of its construction leaves a gap between adjacent items in a layer as this gap can be removed by the compaction process. In particular, the use of a gripper which comprises jaws such as clamping plates or the like necessarily leaves a gap between items whereas a vacuum gripper, which operates using suction on an uppermost surface of an item, can stack items without leaving any gap between them. However, grippers comprising jaws have significant advantages over vacuum grippers. In particular, they enable heavier items to be stacked, they do not require the upper surface of the items to be flat and suitable for gripping by a vacuum gripper, and they operate faster. Hence, the use of a compactor in accordance with the invention enables all the advantages of a jaw-like gripper to be used whilst removing the main disadvantage which is that gaps are left between items during stacking. The use of such a gripper and of a compactor are complementary to each other in a palletizing process.

According to a second aspect of the present invention there is provided a method of loading a pallet with a plurality of items comprising the steps of:
locating a pallet in a work area;
conveying a plurality of items to be palletized to a location within the work area;
picking up the items from said location and loading them in a predetermined configuration on the pallet located in the work area to produce a stack of items on the pallet;
characterised in that
after each layer of the stack of items has been built up on the pallet, it is compacted.

Preferably, compaction of each layer of items occurs as the layer immediately above it is being built up.

Preferably also, compaction of each layer is achieved by compression of the layer inwardly of the stack around the side edges of the layer.

Further preferred but non-essential features of the present invention are described in the dependent claims appended hereto.

The various aspects of the present invention will now be described by way of example with reference to the accompanying drawing, in which:-
Fig. 1 is a schematic perspective view of an embodiment of palletizer according to the invention;
Fig. 2 is a plan view of the palletizer shown in Fig. 1;
Fig. 3 is a schematic perspective view of a work area within the palletizer shown in Figs. 1 and 2;
Fig. 4 is a schematic side view of a gripper forming part of a loading means of the palletizer shown in Figs 1 to 3;
Fig. 5 is a perspective view from below of a compactor forming part of the palletizer shown in Figs. 1 to 3;
Fig. 6 is a perspective view from one side of part of the palletizer shown in Figs. 1 to 3 during operation of the compactor shown in Fig. 5 when a pallet is being stacked;
Fig. 7 is a plan view of part of a work area of a second embodiment of palletizer according to the invention showing a layer loaded on a pallet prior to compaction;
Fig. 8 is a cross-section along the line VIII-VIII in Fig. 7;
Fig. 9 is a view similar to Fig. 7 but showing the layer during compaction;
Fig. 10 is a side view of the work area shown in Fig. 9;
Fig. 11 is a schematic side view of a third embodiment of palletizer adapted to insert paper from a roll between layers during stacking of a pallet; and
Fig. 12 is a schematic plan view of three palletizers according to the invention which are arranged so that they can be supplied with pallets from a single pallet destacker.

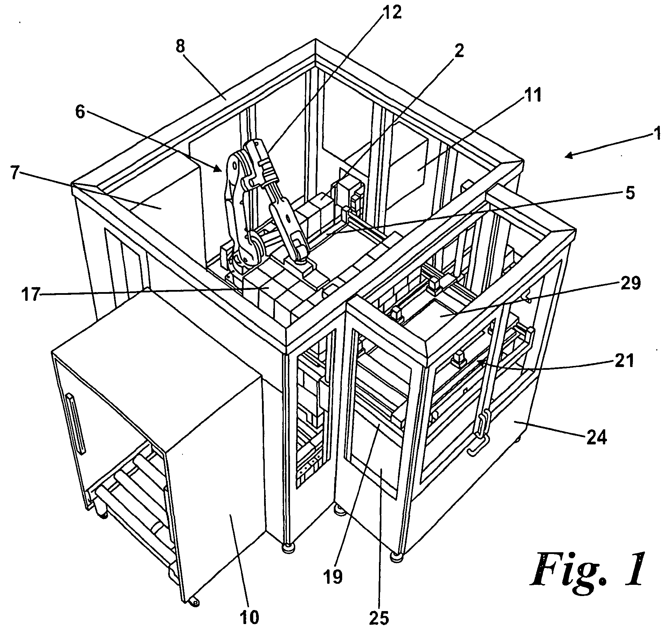

A first embodiment of palletizer 1 according to the invention is shown in Figs. 1 to 3 and is set up to receive a stream of items 2 for loading on a pallet 3 in one of a number of predetermined configurations. The palletizer 1 comprises a work area 4 in which the particular pallet 3 being stacked is located, an infeed conveyor 5 for feeding the items 2 to the work area 4, and a loading means 6 for picking up the items from the infeed conveyor 5 and loading them on the pallet 3 in the work area 4. A programmable control means 7 is also provided to control operation of all of these elements of the palletizer 1 to produce efficiently stacked pallets.

The work area 4 is enclosed by partitions 8 which effectively form the boundaries of the palletizer 1. This area 4 is organized efficiently to take up only a small amount of space. Typically, the overall footprint of the palletizer will be 3400 x 2450 mm. Its height is also low, typically around 2400 mm, as the pallet 3 is loaded without any need to raise it or the items 2 being loaded on it so that no gantry or the like is required.

The infeed conveyor 5 feed items into the partitioned work area 4 and may itself be supplied by another conveyor (not shown) that does not form part of the palletizer 1. Similarly, pallets 3 are supplied to the work area 4 by a pallet conveyor 9, the operation of which is also controlled by the control means 7. This conveyor 9 is preferably linked to a pallet destacker which feeds empty pallets to the palletizer 1. After stacking, loaded pallets are transported by the conveyor 9 from the work area 4 to a partitioned receptacle 10 at one side of the work area 4 where they can either be picked up on a further conveyor (not shown), which again does not form part of the palletizer 1, for onward transportation as required, or picked up directly by a fork-lift truck The pallet conveyor 9 is therefore used to transport pallets through the palletizer 1, an empty pallet 3 being transported inwards to the work area 4 at the same time as a loaded pallet is transported to the receptacle 10. The programmable control means 7 which operates all parts of the palletizer 1 is located in a housing located within the partitioned work area 4 but is accessible and programmable by an operator from the exterior of the partitioned area 4. Entry into the partitioned work area 4 by operatives during operation of the palletizer 1, which could be hazardous, is not, therefore, required.

Within the partitioned work area 4 the items 2 travelling on the infeed conveyor 5 are passed through a station 11 where detectors detect their weight, size and type. This information is transmitted to the control means 7 which in turn controls the loading means appropriately. In particular, the control means 7 adjusts the stacking configuration and pattern to optimize these dependent on the nature of the items 1 and the dimensions of the pallet 3. The control means 7 also determines whether an interleaving sheet is required between each layer of the stack to be built up on the pallet 3. The infeed conveyor 5 preferably comprises an end portion 5a that can be tilted downwards away from the preceding portion of the conveyor 5, at the end of which is located a retractable stop means 5b operated by the control means 7 to control the movement of items on to the end portion 5a. This arrangement enables an item or items to be located in a predetermined position at the end of the end portion 5a of the conveyor 5 wherein it or they can be picked up by the loading means. By coordinating operation of the stop means 5b and the downward movement of the end portion of the conveyor 5, items are fed at a regular rate to the end of the conveyor 5 for pick-up by the loading means 6. In particular, as the items approach the end of the conveyor 5 they are halted by the stop means 5b. When the stop means 5b is retracted by the control means 7 a single item or in cases where several items 2 are to be loaded in the same operation the requisite number of items is fed by the conveyor 5 onto the end portion 5a. The end portion 5a then tilts downwards away from the conveyor 5 and the next adjacent item is prevented from passing on to the end portion 5a by repositioning of the stop means 5b. The downwards movement of the end portion 5a causes the item or items on it to slid or to roll on rollers down to the bottom of the end portion 5a where the leading item hits a buffer (not shown) and is halted. This item or items are then in a position to be picked up by the loading means 6. Coordinated control of the speed of operation of the infeed conveyor 5, the retractable stop means 5b, the movement of the end portion 5a of the conveyor 5 and the loading means 6 by the control means 7 enables a speedy and efficient pallet loading operation to be achieved. The tilting of the end portion 5a also enables an easy, safe and quick pick-up of the item 2 by the loading means 6.

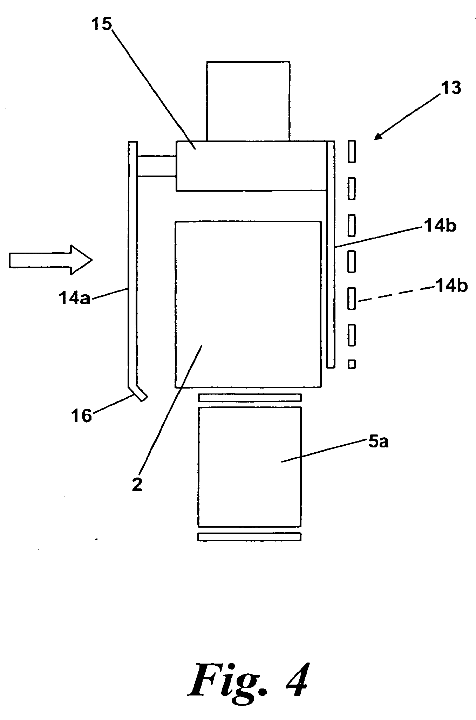

The loading means 6 is located at one side of the work area 4 adjacent the end of the infeed conveyor 5 and at one side of the pallet conveyor 9. It comprises a robotic arm 12 which is provided with a gripper 13 at its end. Operation of the arm 12 and the gripper 13 are both controlled by the control means 7. The arm 12 is articulated and extensible so that it can pick up items 2 from the end portion 5a of the conveyor 5 and place them accurately at a predetermined location in a stack being built up on the pallet 3 located in the work area 4 on the pallet conveyor 9. The gripper 13 is shown in more detail in Fig. 4 and comprises a pair of parallel clamping plates 14 which form jaws in which an item or items 2 are gripped during loading. The plates 14 can be moved towards and away from each other by at least one pneumatic cylinder 15 in order to grip of release the items 2. In the illustrated arrangement one of the plates 14a is moved by the cylinder 15 relative to the other 14b, which is fixed. However, the position of the fixed plate 14b can also be adjusted to take into account different forms of items 2 by moving outwards or inwards relative to the fully closed position of the movable plate 14a. In order to aid secure gripping of the items 2 by the gripper 13, the lower edge of the movable plate 14a is angled inwards slightly as at 16 so that it locates beneath an adjacent lower edge of the item 2 being gripped. This means that the item 2 is supported by the gripper 13 during clamping. Preferably, the gripper 13 is sensitive to the minimum pressure required to clamp an item 2 adequately to load it onto the pallet 3. In this way low clamping pressures can be employed, which reduces the risk of damage to the item occurring during loading.

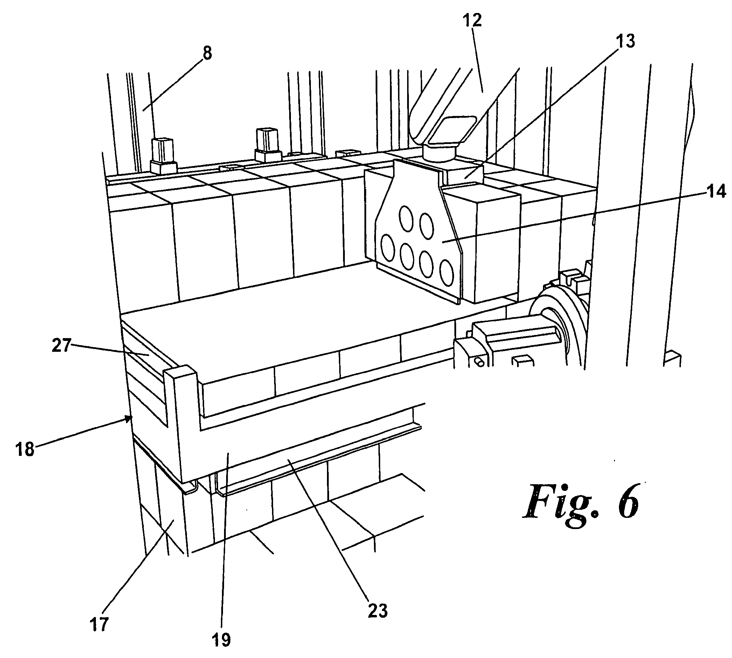

The gripper 13 is detachable from the arm 12 so that different grippers 13 can be used dependent on the nature of the items 2 to be palletized, for example if soft wrapped packages are to be stacked. If the items 2 comprise identically sized packages, then the gripper 13 can be adapted to load more than one item 2 at the same time by picking them up simultaneously from the end portion 5a of the infeed conveyor 5 which can be controlled by the control means 7 to allow the requisite number of items on to the end portion 5a at anyone time. Typically, the gripper 13 will be provided with clamping plates 14 which are sufficiently long to enable several items 2 to be gripped simultaneously. Fig. 6 shows use of the gripper 13 to load three items 2 simultaneously on to a stack 17 within the work area 4 of the palletizer 1.

As indicated above, the gripper 13 preferably comprises a jaw-like gripper that clamps each item that it grips. This provides security when stacking heavier or irregularly shaped items. However, a vacuum gripper 13 could be used in some embodiments.

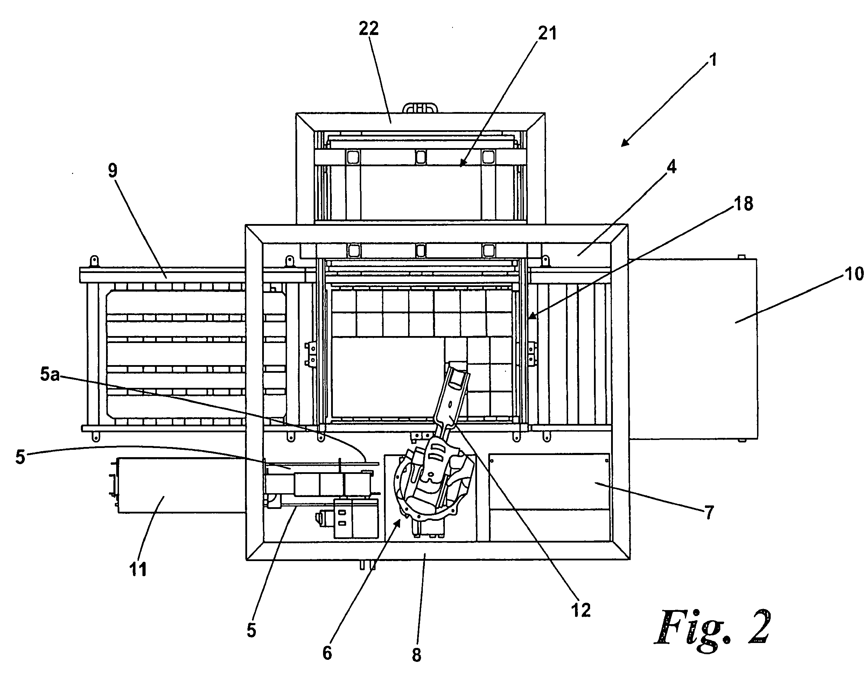

In order to compact each layer of the stack 15 as it is built up on the pallet 3 by the loading means 6, a compactor 18 is located in the work area 4 and is operable by the control means 7. The compactor 18 comprises a rectangular frame 19 which is mounted on an elevator 20 so that it can be raised as the stack 17 is built up on the pallet 3. As shown in Fig. 2, the elevator 20 is located adjacent the pallet conveyor 5 on the opposite side from the robotic arm 12. The frame 19 locates above the pallet conveyor 5 so that it can be located initially around the empty pallet 3 and subsequently around each layer of the stack 17 as it is built up. If the palletizer 1 is to include the option of interleaving sheets between the layers of the stack 17, as in the embodiment shown in Figs. 1 to 3, then the frame 19 may be extended outwards of the work area 4 on the side of the elevator 20 away from the conveyor 5 so that it can also form part of an interleaving apparatus 21, as is described in more detail below, which is located within a partitioned area 22 on one side of the work area 4. As the frame 19 is of necessity slightly larger in area than that of the largest pallet to be loaded by the palletizer 1, a requirement for interleaving doubles the size of the frame in order to accommodate the interleaving material which it will be appreciated is of the same or a similar area to that of the pallet 3.

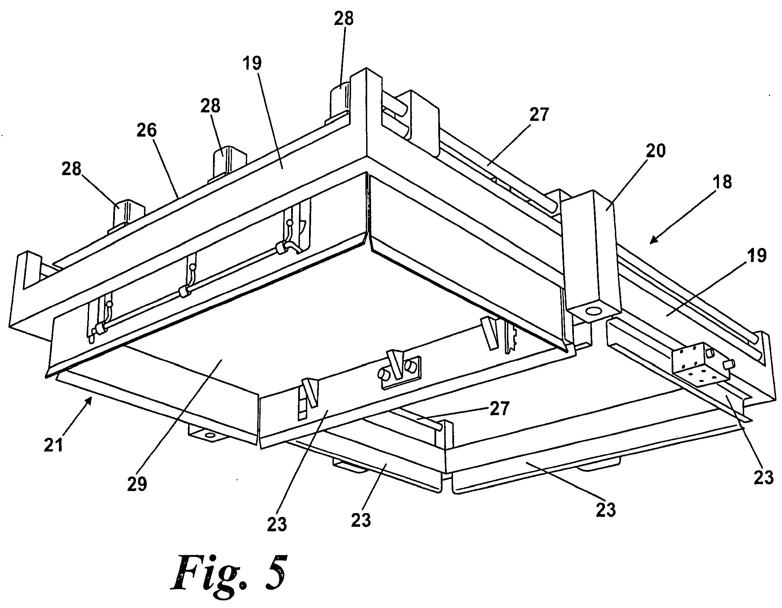

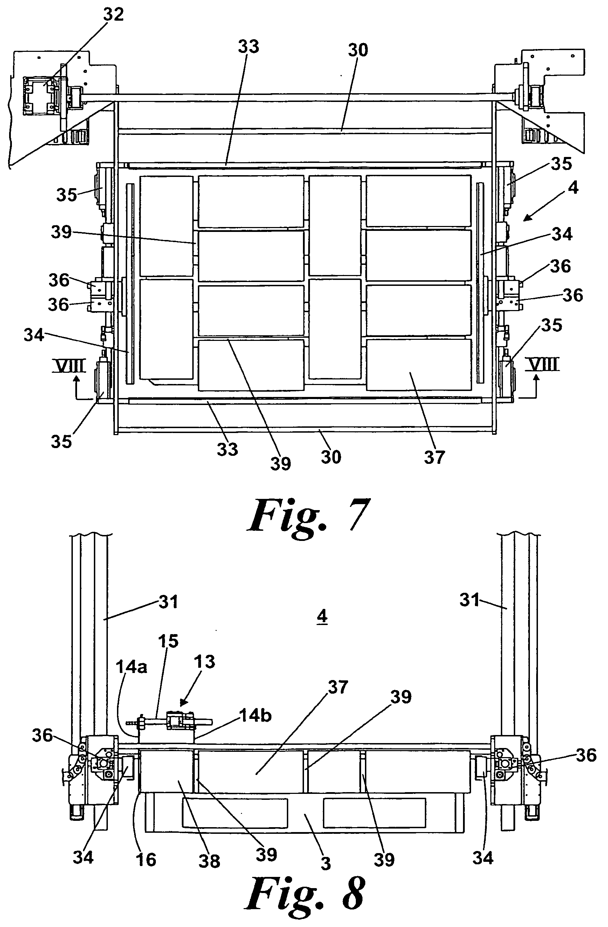

As shown in Fig. 5 and as is described in more detail below with reference to Figs. 7 to 10, the compactor 18 comprises four movable pusher bars 23 that are mounted beneath the frame 19 and are independently moveable pneumatically inwardly of the frame 19. Movement of the bars 23 is controlled by the control means 7, as is the movement of the frame 19 up and down the elevator 20. As is described below, the pusher bars 23 are operated to compact each intermediate layer of the stack 17 being loaded on the pallet 3 as the layer immediately above it is being built up. Compaction takes place either by operating all four horizontal directions simultaneously or by operating two opposing bars 23 and then the other two opposing bars 23. Compaction of each layer is therefore achieved by compression of the layer inwardly of the stack 17 around the side edges of the layer. In addition, the pusher bars 23 are used initially prior to loading of the pallet 3 to detect the size of pallet 3 in the work area 4 to be loaded. This information is transmitted to the control means 7 which is programmed to determine the best configuration to use for stacking the items 2 to be loaded dependent on the shape of the pallet 3 and to control operation of the loading means 4 accordingly. The best configuration is also dependent on the nature of the items 2 themselves. Hence, during operation, the frame 19 rises around the stack 17 so that it forms a barrier wall within which the next layer of the stack 17 is being built up by the loading means 6 and at the same time consolidates the layer below it by means of the bars 23 which are mounted beneath the frame 19.

The interleaving apparatus 21 is used to insert dividing sheets between the layers of a stack 17. Not all items 2 will require such sheets but for some items 2 interleaving is a necessity to ensure that the stack being built up is stable. Figs. 1 to 6 show an embodiment of palletizer 1 which is adapted to insert a cut sheet of material between the layers of a stack 17. In this embodiment, a drawer 24 is located adjacent the conveyor 5 directly beneath the interleaving apparatus 21 attached to the frame 19 and occupying the partitioned area 22. The drawer 24 is adapted to hold a magazine of sheets 25 suitable for interleaving in the stack 17 being built up on the pallet 3. Typically these sheets 25 are corrugated cardboard or solid board sheets and the magazine is adapted to hold sufficient sheets for use in a plurality of pallets 3 so that operation of the palletizer 1 does not have to be stopped between each pallet load. In any event, the drawer 24 can be topped up with more sheets 25 as required during operation of the palletizer 1 as the drawer 24 is accessible and can be opened from the exterior of the work area 4 outside the partitions 8, as shown in Fig. 1.

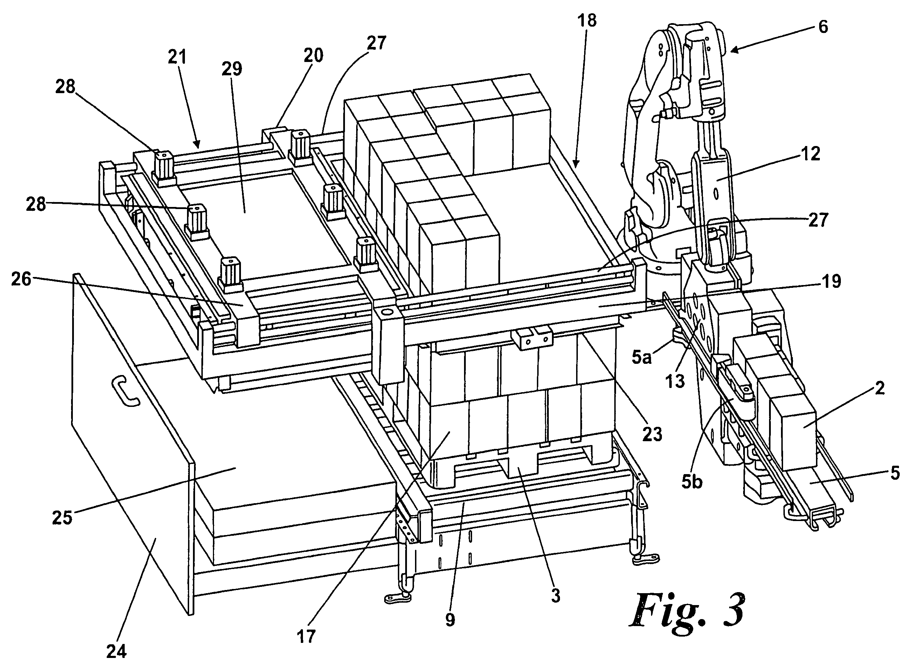

The interleaving apparatus 21 comprises a carriage 26 that traverses the upper part of the frame 19 along rails 27 mounted on the upper edges of the longer sides of the frame 19. The carriage 26 can therefore move to and fro from a first position wherein it occupies the area of the frame 19 above the drawer 24 to a second position wherein it occupies the area of the frame 19 above the stack 17. Mounted on the carriage 26 is a plurality of suction heads 28. The number of heads 28 will depend on the size and weight of the sheets 25 but in most embodiments of the palletizer 1 six suction heads 28 arranged in a regular pattern as shown in Fig. 3 is sufficient. Operation of the interleaving apparatus 21 is controlled by the control means 7. During operation, with the carriage 26 in its first position, the frame 19 descends to its lowest level and the suction heads 28 are then are all activated simultaneously to pick up the uppermost sheet 29 from the magazine. The frame 19 is then elevated to the height of the stack 17. When the loading means 6 has finished a layer of the stack 17, the carriage 26 is operated to move into its second position so that the picked up sheet 29 is moved over the top of the stack 17. The suction heads 28 are then deactivated to drop the sheet 29 on to the top of the stack 17 and the carriage 26 is then moved back to its first position. In a modification, the interleaving apparatus 21 is adapted to pick up a plurality of sheets 29 so that it can hold sufficient for at least one pallet-load. In this case, while single sheets are inserted between the layers of the stack 17, the frame 19 does not need to descend to pick up a fresh sheet while the next layer of the stack 17 is being built.

Part of the work area 4 of a second embodiment of palletizer is shown in Figs. 7 to 10, which show the construction and operation of the compactor in more detail. In this embodiment of palletizer there is no interleaving apparatus so that the compactor comprises a rectangular frame 30 mounted on an elevator which comprises vertical bars 31 and a driving mechanism 32 to which the frame 30 is connected. As in this embodiment no interleaving apparatus is required, the frame 30 simply comprises rods. As in the first embodiment, however, the compactor comprises two pairs of movable pusher bars 33 and 34 that are mounted on the frame 30 via pneumatic or hydraulic rams 35 and 36 respectively.. The opposing bars 33 mounted on the longer sides of the rectangular frame 30 are each connected to the frame via two rams 35 that operate at the ends of the bars 33. In contrast, the opposing bars 34 that are mounted on the shorter sides of the rectangular frame 30 are each connected to the frame via pairs of rams 36 that operate centrally of the bars 34. It will be appreciated that bars 33, 34 are independently moveable inwardly of the frame 30 but to be effective, opposing bars 33 or 34 must operate simultaneously. In practice, all four bars 33, 34 are operated simultaneously under control of the control means 7 as will now be described.

Fig. 7 shows a first layer of items 37 that has been built up on the pallet 3 in the work area. Fig. 8 shows the same layer together with the gripper 13 that is in the process of delivering the last item 38 into the layer. It can be seen that owing to the use of a gripper 13 with clamping plates 14a, 14b, gaps 39 are left between the items 37 in the layer. The compactor is used to reduce the size of this gap, preferably so that the items touch one another. This operation has the advantage that items, such as item 38, can be placed by the gripper 13 so that they overhang the edge of the pallet 3 but after compaction are pushed further onto the pallet 3 so that there is no overhang.

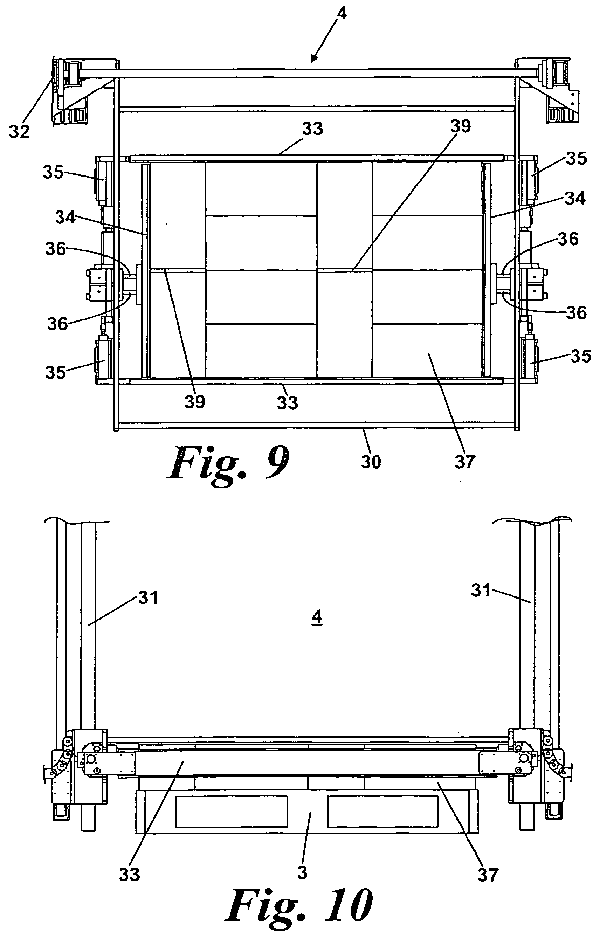

Once the last item 38 has been located in a layer on the pallet 3, the gripper 13 is retracted to pick up an item to be located in the next layer. As soon as the plates 14a, 14b of the gripper 13 are out of the way, the rams 35, 36 are operated simultaneously as shown in Fig. 9. It will be appreciated that the rams 35 operating the bars 33 are retracted so that the bars 33 move inwardly towards one another. In contrast, the rams 36 operating the bars 34 are extended to push the bars 34 towards the adjacent side of the layer. At shown in Fig. 9, most of the gaps 39 are thereby removed. However, a few gaps 39 may remain dependent on the stacking pattern being used but they are substantially reduced in width. The control means 7 controls the stacking pattern being used dependent on the size and shape of the items 37 so that the number and size of the remaining gaps 39 is minimized. As soon as compaction has taken place, the pusher bars 33, 34 are retracted by opposite operation of the rams 35, 36 and the frame 30 is moved up the bars 31 of the elevator so as to be level with the next layer of items being built up above the layer 37.

More generally and with reference to the drawings as a whole, in use of the palletizer 1, the control means 7 instructs the conveyor 9 to feed a pallet 3 into the work area 4 where it is stationed opposite the loading means 6. The compactor 18 is then lowered so that the frame 19 lies immediately above the pallet 3 and the pusher bars 23 are used to detect the edges of the pallet 3. This information is transmitted to the control means 7 which determined the pallet's size and surface area. Items 2 for loading on the pallet 3 are fed into the work area 4 via the conveyor 5 and pass through the station 11 where their dimensions and type are detected by the detectors. From all the information transmitted to the control means 7 it can now determine the stacking configuration to use and whether the interleaving of sheets between stacking layers is required. If interleaving is required, at this stage the interleaving apparatus 21 can be instructed to pick up a first sheet 29 from the magazine 25 in the drawer 24. The loading means 4 can then be operated to commence stacking the items 2 as they are fed to it by the infeed conveyor 5, the operation of which is also controlled as indicated above so that the items are delivered to the end portion 5a at an appropriate rate. Dependent on the sizes and shapes of the items 2, the gripper 13 of the loading means can be instructed by the control means 7 to pick up more than one item at once for placement on the stack 17. The control means 7 also controls operation of the robotic arm 12 to ensure placement of the items 2 with accuracy in the desired configuration. As each layer of a stack 17 is completed, the compactor 18 operates to compact it by using the pusher bars 23 to push inwards of the stack any misaligned items 2. Any gaps between the items 2 created by use of a gripper 13 with clamping plates 14 are also removed by the compaction process, which pushes the items 2 together so that they lie contiguously. At the same time, the interleaving apparatus 21 can operate to place the sheet 29 over the top of the layer being consolidated. This placement can also be over only part of the stack 17, as determined by the control means 7 or only between certain layers of a stack 17. The next layer of the stack 17 can then be built up. Alternatively if no interleaving is required, building of the next layer of the stack 17 can be commenced immediately the lower layer has been completed. Consolidation of the underlying layer can therefore commence or continue as the new layer is being built up. Building of the stack 17 continues in this way until the control means 7 determines that the stack 17 is complete. At this point, the frame 19 is raised above the stack 17 and the pallet conveyor 9 operated to transport the stacked pallet 3 away from the work area 4 to the receptacle and to transport a fresh pallet 3 into the work area 4. The frame 19 can then be lowered and the stacking operation commenced again.

The control means 7 can also be programmed to produce a partial pallet stack 17 in some circumstances. Also, the control means 7 can be programmed to change over automatically from one pallet 3 to a fresh pallet if the detectors in the station 11 detect that the nature of the items 2 to be palletized has changed. In addition, on the detection of a change in the nature of the items 2 to be stacked the palletizer 1 can determine an appropriate stack configuration to be used without any operator assistance being required. If differently sized items 2 are to be stacked on the same pallet 3, the control means 7 can also be programmed to vary the configuration in a particular stack 17 to ensure that the most efficient and stable stack configuration is produced.

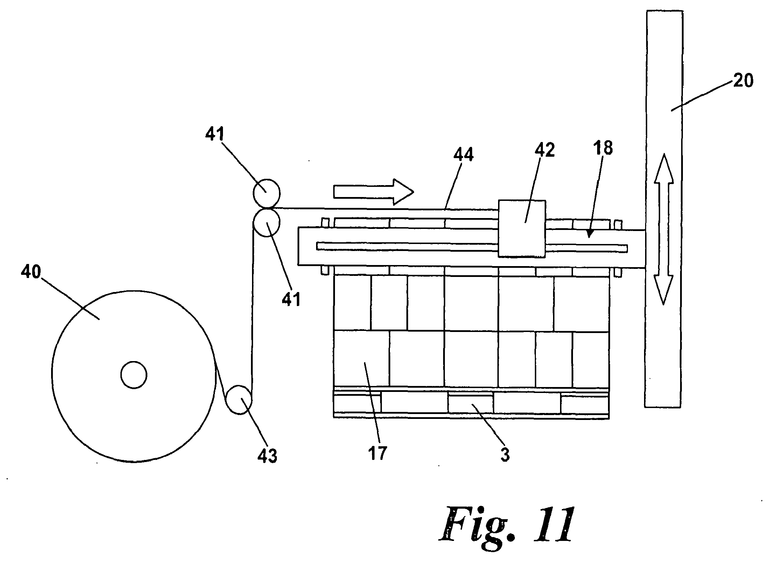

In alternative embodiments, the palletizer 1 can be adapted to insert paper or other material from a roll between the layers of the stack 17. Such an arrangement is shown schematically in Fig. 11. Here a roll of paper 40 is located adjacent the conveyor 5 and its free end is gripped between a pair of smoothing rollers 41 such that it can be picked up at each side thereof by a carriage or carriages 42 which are adapted to run synchronously along the rails 27 of the frame 19 above the stack 17. A tensioning roller 43 may also be included between the roll 40 and the rollers 41. Under control of the control means 7, after the completion of each layer of the stack 17, the carriage or carriages 42 can be operated to grip the free end of the paper held between the rollers 41 and travel along the rails 27 to pull a length 44 of paper off the roll 40 and position it above the stack 17. The distance travelled along the rails 27 can be determined by the control means 7 dependent on the nature of the individual items 2 and their placement in any given configuration. Once the carriage or carriages 42 have travelled to the desired infeed distance, a cutter (not shown) can be deployed, again under control of the control means to cut off the end of the paper adjacent the rollers 41 to leave an appropriately sized sheet covering the top of the stack 17. The carriage or carriages 42 can then release the end of the paper and return to grip the new free end exposed by the cutter. In a similar fashion to the embodiments which interleave separate sheets of material, the roll of paper 40 for interleaving can be replaced during operation of the palletizer 1 as its supports (not shown) are accessible from the exterior of the work area 4 outside the partitions 8. Replacement can take place either as the roll in use is used up or if it is desired to change the type of material of the roll, for example the thickness or coating on the material.

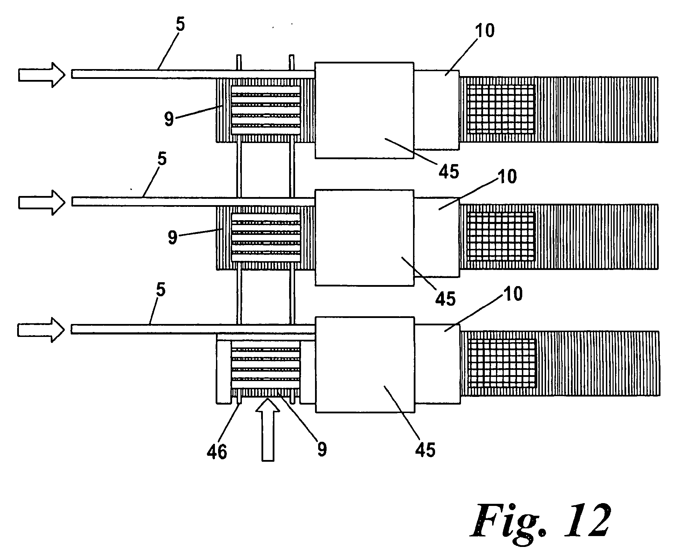

A plurality of palletizers 45 according to the invention can be set up together to operate in an array or bank as shown in Fig. 12. Here, three palletizers 1 are arranged in a triple line system and are fed with pallets from a single pallet destacker (not shown) along a common conveyor 46.

Palletizers in accordance with the invention have several advantages over conventional palletizers, as follows.
- The stacks are compacted to improve stability
- Less floor space is required than conventional palletizers
- An immediate change in the configuration of any particular stack can be made if the size of the items to be palletized changes
- The pallet size can be detected before stacking commences so that the optimal stacking pattern can be adopted for the items to be stacked
- The size and type of packages is detected and an appropriate stack configuration can be determined without any operator assistance being required
- A greater throughput of items can be achieved
- The use of a robotic arm and gripper improves the degree of maintenance required and the reduces the number of spare parts required
- Service access to all parts is easy and servicing also easy
- Complicated stack configurations can be used for improved pallet utilization
- Installation costs are low

## Claims

1. A palletizer (1) for loading a pallet (3) with a plurality of items (2; 36) comprising
a work area (4) in which the pallet (3) is located during loading;
an infeed conveyor (5) operable to convey the items (2) to be palletized to a location within the work area (4);
a loading means (6) having a gripper (13) operable to pickup the items (2) from the infeed conveyor (5) and load them in a predetermined configuration on the pallet (3) located in the work area (4);
a programmable control means (7) operable to control operation of the loading means (6) and the infeed conveyor (5); and
**characterised in that**
a compactor (18) is located in the work area (4) and is operable by the control means (7) to compact each layer of a stack of items (17) as it is built up on the pallet (3) by the loading means (6).

2. A palletizer as claimed in Claim 1, **characterised in that** the compactor (18) comprises a frame (19; 30) mounted on an elevator (20; 31, 32) such that it can be located around each layer of the stack of items (17), the frame (19; 30) comprising movable pusher bars (23; 33, 34) operable to compact said layer after it has been built up.

3. A palletizer as claimed in Claim 2, **characterised in that** the movable pusher bars (23; 33, 34) operate to compact each intermediate layer of the stack of items (17; 37) as the layer immediately above it is being built up.

4. A palletizer as claimed in any of Claims 2 or 3, **characterised in that** the movable pusher bars (23; 33, 34) of the compactor (18) are used to detect the size of the pallet (3) located in the work area (4) prior to loading, and preferably that information concerning the size of the pallet (3) is transmitted to the control means (7) which then controls operation of the loading means (6) whereby items (2) are loaded on the pallet (3) in a predetermined configuration appropriate for the pallet size detected.

5. A palletizer as claimed in any of Claims 1 to 4, **characterised in that** an interleaving apparatus (21) is provided to interleave a sheet of material (29; 34) between layers of the stack of items as it is built up on the pallet (3) as determined by the control means (7).

6. A palletizer as claimed in any of Claims 1 to 5, **characterised in that** the loading means (6) comprises a robotic arm (12) which is provided with the gripper (13) at its end, operation of the arm (12) and the gripper (13) being controlled by the control means (7).

7. A palletizer as claimed in any of Claims 1 to 6, **characterised in that** the gripper (13) comprises a pair of parallel clamping plates (14) which form jaws in which an item (2) or a plurality of items (2) are gripped during loading, and preferably
wherein at least one of the plates (14a) is relatively moveable towards and away from the other (14b) by at least one pneumatic cylinder (15), or
that the lower edge of one of the plates (14a) is angled inwards (16) in order that it locates beneath a lower edge of an item (2) being gripped by the gripper (13).

8. A palletizer as claimed in any of Claims 1 to 7, **characterised in that** the infeed conveyor (5) comprises an end portion (5a) that can be tilted downwards away from the preceding portion of the conveyor (5) under the control of the control means (7) to feed an item or items (2) into a predetermined position within the work area (4) wherein it or they can be picked up by the loading means (6), and preferably
wherein a retractable stop means (5b) is located at the end of the conveyor (5) preceding the end portion (5b) and is operated by the control means (7) to control the movement of items (2) on to the end portion (5a) of the conveyor (5).

9. A method of loading a pallet (3) with a plurality of items (2) comprising the steps of:
locating a pallet (3) in a work area (4);
conveying a plurality of items (2) to be palletized to a location within the work area (4);
picking up the items (2) from said location and loading them in a predetermined configuration on the pallet (3) located in the work area (4) to produce a stack (17) of items on the pallet (3);
**characterised in that**
after each layer of the stack (17) of items has been built up on the pallet (3) it is compacted.

10. A method as claimed in Claim 9, **characterised in that** the items (2) are picked up from said location and loaded on the pallet (3) by a loading means (6) comprising a jaw-like gripper (13).

11. A method as claimed in Claim 10, **characterised in that** the gripper (13) is adapted to clamp the item or items being gripped and to locate beneath a lower edge of the item or items (2) being gripped during loading.

12. A method as claimed in any of Claims 10 or 11, **characterised in that** the gripper (13) is sensitive to the minimum pressure required to clamp an item (2) adequately to load it onto the pallet (3).

13. A method as claimed in any of Claims 9 to 12, **characterised in that** compaction of each layer of items occurs as the layer immediately above it is being built up.

14. A method as claimed in any of Claims 9 to 13, **characterised in that** a sheet of material (29; 44) is interleaved between layers of the stack of items as it is built up on the pallet (3).

15. A method as claimed in Claim 14, **characterised in that** a magazine of sheets (25) suitable for interleaving in the stack (17) is located in the work area (4) and is accessible from the exterior of the work area (4) whereby it can be topped up as required during operation of the palletizer (1), or
**in that** the sheet of material (44) is cut from a roll (40) of said material.

## Patentansprüche

1. Palettierer (1) zum Beladen einer Palette (3) mit einer Mehrzahl von Elementen (2; 36), welcher umfasst:
einen Arbeitsbereich (4) in welchem die Palette (3) im Verlaufe der Beladung positioniert ist;
ein Zubringer-Förderband (5), welches dazu ausgelegt ist, die zu palettierenden Elemente (2) an eine Stelle innerhalb des Arbeitsbereichs (4) zu fördern;
ein Ladeelement (6), welches einen Greifer (13) hat, welcher dazu ausgelegt ist, die Elemente (2) von dem Zubringer-Förderband (5) aufzunehmen und sie bei einem vorbestimmten Aufbau auf der Palette (3), welche in dem Arbeitsbereich (4) positioniert ist, zu laden;
ein programmierbares Steuerelement (7), welches dazu ausgelegt ist, einen Betrieb des Ladeelements (6) und des Zubringer-Förderbands (5) zu steuern; und
**dadurch gekennzeichnet, dass**
ein Kompaktierer (18) im Arbeitsbereich (4) positioniert ist und durch das Steuerelement (7) dazu bedienbar ist, jede Stapelschicht von Elementen (17), wenn sie durch das Ladeelement (6) auf der Palette (3) aufgebaut ist, zu kompaktieren.

2. Palettierer nach Anspruch 1, **dadurch gekennzeichnet, dass** der Kompaktierer (18) einen Rahmen (19; 30) umfasst, welcher auf einer Hebeanlage (20; 31, 32) eingerichtet ist, so dass er um jede Stapelschicht von Elementen (17) positioniert werden kann, wobei der Rahmen (19; 30) bewegbare Schieberstangen (23; 33, 34) umfasst, welche dazu bedienbar sind, die Schicht, nachdem sie aufgebaut worden ist, zu kompaktieren.

3. Palettierer nach Anspruch 2, **dadurch gekennzeichnet, dass** die bewegbaren Schieberstangen (23; 33, 34) dazu bedienbar sind, jede zwischenliegende Stapelschicht von Elementen (17; 37) zu kompaktieren, sobald die unmittelbar darüberliegende Schicht aufgebaut ist.

4. Palettierer nach Anspruch 2 oder 3, **dadurch gekennzeichnet, dass** die bewegbaren Schieberstangen (23; 33, 34) von dem Kompaktierer (18) dazu verwendet werden, die Größe von der Palette (3), welche in dem Arbeitsbereich (4) positioniert ist, vor einer Beladung zu erfassen, und wobei vorzugsweise diese Information im Hinblick auf die Größe von der Palette (3) an das Steuerelement (7) übertragen wird, welches dann einen Betrieb von dem Ladeelement (6) steuert, wobei Elemente (2) in einem vorbestimmten Aufbau, welcher für die erfasste Paletten-Größe geeignet ist, auf der Palette (3) beladen werden.

5. Palettierer nach einem der Ansprüche 1 bis 4, **dadurch gekennzeichnet, dass** eine Zwischenlege-Einrichtung (21) bereitgestellt ist, um eine Materialbahn (29; 34) zwischen Stapelschichten von Elementen zwischenzulegen, sobald sie, wie durch das Steuerelement (7) bestimmt, auf der Palette (3) aufgebaut sind.

6. Palettierer nach einem der Ansprüche 1 bis 5, **dadurch gekennzeichnet, dass** das Ladeelement (6) einen Roboterarm (12) umfasst, welcher an seinem Ende mit dem Greifer (13) bereitgestellt ist, wobei ein Betrieb des Arms (12) und des Greifers (13) durch das Steuerelement (7) gesteuert wird.

7. Palettierer nach einem der Ansprüche 1 bis 6, **dadurch gekennzeichnet, dass** der Greifer (13) ein Paar von parallelen Klemmplatten (14) umfasst, welche Klauen ausbilden, in welchen ein Element (2) oder eine Mehrzahl von Elementen (2) im Verlaufe der Beladung ergriffen werden, und
wobei vorzugsweise zumindest eine der Platten (14a) durch zumindest einen pneumatischen Zylinder (15) in Relation zu der weiteren Platte (14b) bewegbar ist und von dieser fort bewegbar ist, oder
wobei die untere Kante von einer der Platten (14a) nach innen (16) angewinkelt ist, damit sie sich unterhalb von einer unteren Kante von einem Element (2), welches durch den Greifer (13) ergriffen ist, positioniert.

8. Palettierer nach einem der Ansprüche 1 bis 7, **dadurch gekennzeichnet, dass** das Zubringer-Förderband (5) einen Endabschnitt (5a) umfasst, welcher unter Steuerung von dem Steuerelement (7) von dem vorangehenden Abschnitt des Förderbands (5) fortgerichtet nach unten geneigt werden kann, um ein Element oder um Elemente (2) an eine vorbestimmte Position innerhalb des Arbeitsbereichs (4) zuzuführen, wobei es oder wobei sie durch das Ladeelement (6) aufgenommen werden kann bzw. können, und
wobei vorzugsweise ein einfahrbares Anschlagelement (5b) am Ende von dem Förderband (5), dem Endabschnitt (5b) vorangehend, positioniert ist, und durch das Steuerelement (7) dazu bedient wird, die Bewegung der Elemente (2) zum Endabschnitt (5a) von dem Förderband (5) zu steuern.

9. Verfahren zum Beladen einer Palette (3) mit einer Mehrzahl von Elementen (2), welches die Schritte umfasst:
Positionieren von einer Palette (3) in einem Arbeitsbereich (4);
Zuführen von einer Mehrzahl von Elementen (2), welche zu Palettieren sind, an eine Position innerhalb des Arbeitsbereichs (4);
Aufnehmen der Elemente (2) von der Stelle, und Beladen dieser bei einem vorbestimmten Aufbau auf der Palette (3), welche in dem Arbeitsbereich (4) positioniert ist, um einen Stapel (17) von Elementen auf der Palette (3) aufzubauen;
**dadurch gekennzeichnet, dass**
nachdem jede Stapelschicht (17) von Elementen auf der Palette (3) aufgebaut worden ist, diese kompaktiert wird.

10. Verfahren nach Anspruch 9, **dadurch gekennzeichnet, dass** die Elemente (2) durch ein Ladeelement (6), welches einen klauenförmigen Greifer (13) umfasst, von dieser Stelle aufgenommen werden und auf der Palette (3) geladen werden.

11. Verfahren nach Anspruch 10, **dadurch gekennzeichnet, dass** der Greifer (13) dazu ausgelegt ist, das Element oder die Elemente, welche ergriffen werden, einzuspannen, und sich unterhalb von einer unteren Kante von dem Element oder den Elementen (2), welche ergriffen werden, im Verlaufe der Beladung zu positionieren.

12. Verfahren nach Anspruch 10 oder 11, **dadurch gekennzeichnet, dass** der Greifer (13) im Hinblick auf den minimalen Druck, welcher erforderlich ist, um ein Element (2) angemessen einzuspannen, um es auf der Palette (3) zu laden, sensitiv ist.

13. Verfahren nach einem der Ansprüche 9 bis 12, **dadurch gekennzeichnet, dass** die Kompaktierung von jeder Schicht von Elementen vorgenommen wird, sobald die unmittelbar oberhalb befindliche Schicht aufgebaut ist.

14. Verfahren nach einem der Ansprüche 9 bis 13, **dadurch gekennzeichnet, dass** eine Materialbahn (29; 44) zwischen den Stapelschichten von Elementen, sobald sie auf der Palette (3) aufgebaut sind, zwischengelegt wird.

15. Verfahren nach Anspruch 14, **dadurch gekennzeichnet, dass** eine Bevorratung von Bahnen (25), welche zum Zwischenlegen in den Stapel (17) geeignet sind, im Arbeitsbereich (4) positioniert ist, und von außerhalb des Arbeitsbereichs (4) zugänglich ist, wobei sie erforderlicherweise im Verlaufe des Betriebes von dem Palettierer (1) aufgefüllt werden kann, oder
wobei die Materialbahn (44) von einer Rolle (40) des Materials abgeschnitten wird.

## Revendications

1. Dispositif de palettisation (1) destiné à charger une palette (3) avec une pluralité d'articles (2 ; 36) comprenant
une zone de travail (4) dans laquelle se situe la palette (3) au cours d'un chargement ;
un convoyeur d'alimentation (5) fonctionnel pour transporter les articles (2) à palettiser vers un emplacement à l'intérieur de la zone de travail (4) ;
un moyen de chargement (6) présentant un dispositif de préhension (13) fonctionnel pour saisir les articles (2) à partir du convoyeur d'alimentation (5) et les charger suivant une configuration prédéterminée sur la palette (3) qui se situe dans la zone de travail (4) ;
un moyen de commande programmable (7) fonctionnel pour commander le fonctionnement du moyen de chargement (6) et celui du convoyeur d'alimentation (5) ; et
**caractérisé en ce que**
un dispositif de compactage (18) se situe dans la zone de travail (4) et peut être actionné par les moyens de commande (7) pour compacter chaque couche d'un empilement d'articles (17) une fois qu'elle est formée sur la palette (3) par le moyen de chargement (6).

2. Dispositif de palettisation selon la revendication 1, **caractérisé en ce que** le dispositif de compactage (18) comprend un châssis (19 ; 30) monté sur un élévateur (20 ; 31, 32) de manière à pouvoir le positionner autour de chaque couche d'empilement d'articles (17), le châssis (19 ; 30) comprenant des barres de dispositif de poussée mobiles (23 ; 33, 34) fonctionnelles pour compacter ladite couche une fois qu'elle a été formée.

3. Dispositif de palettisation selon la revendication 2, **caractérisé en ce que** les barres de dispositif de poussée mobiles (23 ; 33, 34) fonctionnent pour compacter chaque couche intermédiaire de l'empilement d'articles (17 ; 37) étant donné que la couche qui se situe immédiatement au-dessus de celle-ci est formée.

4. Dispositif de palettisation selon l'une quelconque des revendications 2 ou 3, **caractérisé en ce que** les barres de dispositif de poussée mobiles (23 ; 33, 34) du dispositif de compactage (18) sont utilisées pour détecter la taille de la palette (3) qui se situe dans la zone de travail (4) avant un chargement, et de préférence **en ce que** les informations concernant la taille de la palette (3) sont transmises au moyen de commande (7) qui commande ensuite le fonctionnement du moyen de chargement (6), moyennant quoi les articles (2) sont chargés sur la palette (3) suivant une configuration prédéterminée qui convient à la taille de palette détectée.

5. Dispositif de palettisation selon l'une quelconque des revendications 1 à 4, **caractérisé en ce qu'**un appareil d'intercalage (21) est prévu pour intercaler une feuille de matériau (29 ; 34) entre les couches de l'empilement d'articles une fois qu'il est formé sur la palette (3) comme cela est déterminé par le moyen de commande (7).

6. Dispositif de palettisation selon l'une quelconque des revendications 1 à 5, **caractérisé en ce que** le moyen de chargement (6) comprend un bras robotisé (12) qui est doté d'un dispositif de préhension (13) au niveau de son extrémité, le fonctionnement du bras (12) et du dispositif de préhension (13) étant commandés par le moyen de commande (7).

7. Dispositif de palettisation selon l'une quelconque des revendications 1 à 6, **caractérisé en ce que** le dispositif de préhension (13) comprend une paire de plaques de serrage parallèles (14) qui forment des mâchoires dans lesquelles sont saisis un article (2) ou une pluralité d'articles (2) au cours d'un chargement, et de préférence
dans lequel au moins l'une des plaques (14a) est relativement mobile en allant vers ou en s'éloignant de l'autre (14b), par au moins un cylindre pneumatique (15) ; ou
**en ce que** le bord inférieur de l'une des plaques (14a) présente un angle vers l'intérieur (16) afin qu'il se situe sous un bord inférieur d'un article (2) étant saisi par le dispositif de préhension (13).

8. Dispositif de palettisation selon l'une quelconque des revendications 1 à 7, **caractérisé en ce que** le convoyeur d'alimentation (5) comprend une partie d'extrémité (5a) qui peut être inclinée vers le bas en s'éloignant de la partie précédente du convoyeur (5) sous la commande du moyen de commande (7) pour disposer un article ou des articles (2) dans une position prédéterminée à l'intérieur de la zone de travail (4) dans laquelle il(s) peut(vent) être saisi(s) par le moyen de chargement (6), et de préférence
dans lequel un moyen de butée escamotable (5b) se situe au niveau de l'extrémité du convoyeur (5) précédant la partie d'extrémité (5b) et est actionné par le moyen de commande (7) pour commander le déplacement des articles (2) sur la partie d'extrémité (5a) du convoyeur (5).

9. Procédé de chargement d'une palette (3) munie d'une pluralité d'articles (2) comprenant les étapes consistant à :
localiser une palette (3) dans une zone de travail (4) ;
transporter une pluralité d'articles (2) à palettiser vers un emplacement à l'intérieur de la zone de travail (4) ;
saisir les articles (2) à partir dudit emplacement et les charger suivant une configuration prédéterminée sur la palette (3) qui se situe dans la zone de travail (4) afin de réaliser un empilement (17) d'articles sur la palette (3) ;
**caractérisé en ce que**
une fois que chaque couche d'empilement (17) d'articles a été formée sur la palette (3), elle est compactée.

10. Procédé selon la revendication 9, **caractérisé en ce que** les articles (2) sont saisis à partir dudit emplacement et sont chargés sur la palette (3) par un moyen de chargement (6) comprenant un dispositif de préhension similaire à une mâchoire (13).

11. Procédé selon la revendication 10, **caractérisé en ce que** le dispositif de préhension (13) est adapté de manière à serrer l'article ou les articles saisis et à le positionner sous un bord inférieur de l'article ou des articles (2) saisis au cours d'un chargement.

12. Procédé selon l'une quelconque des revendications 10 ou 11, **caractérisé en ce que** le dispositif de préhension (13) est sensible à la pression minimum requise pour serrer de manière appropriée un article (2) pour le charger sur la palette (3).

13. Procédé selon l'une quelconque des revendications 9 à 12, **caractérisé en ce que** le compactage de chaque couche d'articles se produit une fois que la couche qui se situe immédiatement au-dessus de celle-ci, est formée.

14. Procédé selon l'une quelconque des revendications 9 à 13, **caractérisé en ce qu'**une feuille de matériau (29 ; 44) est intercalée entre les couches de l'empilement d'articles une fois qu'il est formé sur la palette (3).

15. Procédé selon la revendication 14, **caractérisé en ce qu'**un chargeur de feuilles (25) appropriées à un intercalage dans l'empilement (17) se situe dans la zone de travail (4) et est accessible à partir de l'extérieur de la zone de travail (4), moyennant quoi il est possible de le recharger à la demande au cours du fonctionnement du dispositif de palettisation (1) ; ou
**en ce que** la feuille de matériau (44) est coupée à partir d'un rouleau (40) dudit matériau.
